# EUROPEAN PATENT APPLICATION

(11) **EP 1 721 950 A1**
(43) Date of publication of application: **15.11.2006**
(21) Application number: 06008227.8
(22) Date of filing: 20.04.2006
(51) Int. Cl.: C09J 7/02, B32B 7/12, B32B 25/00

(54) **Waterproof and airtight pressure-sensitive adhesive tape**

(30) Priority: 20.04.2005 JP 2005122281
(71) Applicant: NITTO DENKO CORPORATION, Osaka (JP)
(72) Inventor: Takahashi, Nobuyuki, Ibaraki-shi Osaka (JP); Ishikawa, Masayuki, Ibaraki-shi Osaka (JP); Inagaki, Sadayuki, Nakahara-cho Toyohashi-shi Aichi (JP)
(74) Representative: Grünecker, Kinkeldey, Stockmair & Schwanhäusser Anwaltssozietät

(57) **Abstract**

A waterproof and airtight pressure-sensitive adhesive tape includes a substrate and a pressure-sensitive adhesive layer on one surface thereof, wherein the substrate is a rubber-made sheet; and a film-like material having elongation properties is laminated on a surface in the opposite side to the pressure-sensitive adhesive layer of the substrate. It is preferable that the rubber-made sheet as the substrate has an elongation at the time of breakage (distance between two gage marks: 40 mm, drawing rate: 300 mm/min) of from 200 to 1,200 % in both the longitudinal direction and the cross direction and a stress under 100 % elongation (distance between two gage marks: 40 mm, drawing rate: 50 mm/min) of from 10 to 100 N/cm² in both the longitudinal direction and the cross direction.

## Description

### FIELD OF THE INVENTION

The present invention relates to a waterproof and airtight pressure-sensitive adhesive tape which is used for enhancing waterproof properties and airtightness of structures such as dwelling houses. In more detail, the invention relates to a waterproof and airtight pressure-sensitive adhesive tape which is suitably used for fixing a structure of dwelling house to a member or fixing members to each other (mainly for fixing portions where the tape is required to have elongation properties at the time of sticking, such as openings and shaped portions), or the like.

### BACKGROUND OF THE INVENTION

So far, in order to cope with the enforcement of regulations regarding promotion of quality of waterproof and airtight dwelling houses (dwelling houses having excellent waterproof properties and airtightness) and the energy saving following high airtightness and high heat insulation of dwelling houses, waterproof and airtight pressure-sensitive adhesive tapes have been used in gaps between a structure of dwelling house and a member or between members (mainly surroundings of sash openings or joints such as overlaps of moisture-permeable waterproof sheets) for the purpose of realizing waterproof properties and/or airtightness (see JP-A-2003-138227, JP-A-2003-41233 and JP-A-9-209464(the term "JP-A" as used herein means an "unexamined published Japanese patent application")). Conventional waterproof and airtight pressure-sensitive adhesive tapes are, for example, constructed such that a butyl rubber, a rubberized asphalt, an acrylic pressure-sensitive adhesive, etc. is coated on one surface of a substrate (for example, non-woven fabrics, woven fabrics, and plastic films). These conventional waterproof and airtight pressure-sensitive adhesive tapes can follow the movement of structures of dwelling houses or various members and exhibit waterproof properties and airtightness over a long period of time.

However, in almost all cases, the conventional waterproof and airtight pressure-sensitive adhesive tapes were used in the planar portions in which no elongation of pressure-sensitive adhesive tape is required, such as the horizontal plane, the vertical plane, or a rectangular portion of member, and it was not assumed that the pressure-sensitive adhesive tape be applied in the elongated state. Accordingly, in almost all cases, the conventional waterproof and airtight pressure-sensitive adhesive tapes usually had an elongation at break of from 20 to 70 % with the exception of a part thereof. For this reason, for example, in applying a pressure-sensitive adhesive tape to openings (such as penetration portions of water feed/discharge pipes and ventilation fans) or shaped portions (mainly external angles or convexes), the plane of a structure to which the pressure-sensitive adhesive tape is stuck becomes two or three planes, and conventional waterproof and airtight pressure-sensitive adhesive tapes are hardly applied. Even though the application could be achieved, peeling or wrinkle is generated in the sticking portion of the pressure-sensitive adhesive tape. For this reason, a problem that the waterproof properties and airtightness cannot be kept is generated.

Also, according to the conventional application method, as a method of realizing waterproof properties and airtightness of openings or shaped portions, there are employed a method of using plastic moldings, a method of overlapping waterproof and airtight pressure-sensitive adhesive tapes having been cut into a proper length, and a method of using a tape or sheet comprising a crepe-formed substrate having a pressure-sensitive adhesive coated thereon. In these methods, for example, in the method of using moldings, moldings having a number of shapes are required, and the application requires time and labor such that in installation, fixing is carried out using a pressure-sensitive adhesive tape. On the other hand, in the method of overlapping pressure-sensitive adhesive tapes and the method of using a pressure-sensitive adhesive tape using a crepe-formed substrate, in many cases the surface of the pressure-sensitive adhesive tape (surface of the substrate) is rough or irregular. Thus, a waterway is liable to be generated in overlaps of pressure-sensitive adhesive tapes because of a lowering of the adhesive strength by a reduction of the pressure-sensitive adhesive surface. Also, use of a sealing material, etc. becomes necessary for the purpose of sufficient adhesion under pressure or assistance of waterproof, if desired. In this way, it is the actual situation that sufficient waterproof properties and airtightness are hardly obtained and that the application requires time and labor.

In addition, as other methods, there is employed a method of filling or coating a material in the clay or rubber sheet form, or a butyl-based or silicone-based sealing material. However, though the material in the clay or rubber sheet form or the sealing material before curing is suitable for filling a narrow gap; such materials are likely damaged because their strength is low. Also, these materials hardly follow excessive movement of the structure or members so that they are neither suitable for filling or coating to be employed in broad portions nor satisfactory.

Then, the present inventors developed a waterproof and airtight pressure-sensitive adhesive tape having a low tensile stress and largely improved elongation properties as compared with conventional waterproof and airtight pressure-sensitive adhesive tapes, namely a waterproof and airtight pressure-sensitive adhesive tape having expandability (expandable waterproof and airtight pressure-sensitive adhesive tape). When such an expandable waterproof and airtight pressure-sensitive adhesive tape is used, in a three-plane intersecting structure having three planes, with which three planes come into contact and the respective planes of the three planes come into contact with each other, even if a point-like angle part with which the three planes come into contact and three-plane intersecting surroundings including the surroundings of the point-like angle part are subjected to a waterproof application, it becomes possible to keep waterproof properties and airtightness over a long period of time. Also, it becomes possible to carry out the waterproof application with ease.

However, in general, the surface of a rubber-made sheet (especially, an unvulcanized rubber-made sheet) which is a substrate of an expandable waterproof and airtight pressure-sensitive adhesive tape has viscosity, an aspect of which, however, varies depending upon the kind of a rubber component (especially, a synthetic rubber) which constructs the rubber-made sheet or the kind or contents of a blending agent. Accordingly, in the case of carrying out the application while folding such that the back surfaces of expandable waterproof and airtight pressure-sensitive adhesive tapes (surfaces in the opposite side to the pressure-sensitive adhesive layer) come into contact with each other, or in the case where the back surfaces of expandable waterproof and airtight pressure-sensitive adhesive tapes come into contact with each other at the time of application, when it is intended to expand the folded portion or to peel away the expandable waterproof and airtight pressure-sensitive adhesive tapes in the portion where the back surfaces come into contact with each other, there is some possibility that a waterproof and airtight function of the expandable waterproof and airtight pressure-sensitive adhesive tape is hindered or lost because the expansion cannot be carried out due to self adhesion (blocking) or the expandable waterproof and airtight pressure-sensitive adhesive tape is elongated or broken.

Also, the back surface of an expandable waterproof and airtight pressure-sensitive adhesive tape comes into contact with a structural material or member of a dwelling house so that it becomes impossible to peel away the expandable waterproof and airtight pressure-sensitive adhesive tape from the structural material or member or that the generation of wrinkle or damages such as cutting are caused on a rubber-made sheet as the substrate of the expandable waterproof and airtight pressure-sensitive adhesive tape. Thus, there is a problem such that one must take care to handling at the time of application.

### SUMMARY OF THE INVENTION

Accordingly, an object of the invention is to provide a waterproof and airtight pressure-sensitive adhesive tape which even when applied in a place required to have elongation properties in a pressure-sensitive adhesive tape, prevents self adhesion between the back surfaces from occurring, is good in handling properties at the time of application, prevents the generation of wrinkle, cutting or peeling from occurring and is able to exhibit excellent waterproof properties and airtightness over a long period of time.

Another object of the invention is to provide a waterproof and airtight pressure-sensitive adhesive tape which even when a site to which a pressure-sensitive adhesive tape is stuck is a site having a curved surface shape or a three-dimensional shape, is easy with respect to sticking application works of the pressure-sensitive adhesive tape, is good in adhesive properties in an overlap of the pressure-sensitive adhesive tapes after the application and is able to keep to ensure waterproof properties and airtightness over a long period of time.

A still another object of the invention is to provide a waterproof and airtight pressure-sensitive adhesive tape useful as a pressure-sensitive adhesive tape, which is used for fixing a structure of dwelling house to a member or fixing members to each other and is able to prevent penetration of storm sewage into the inside of a dwelling house and to prevent dew condensation or corrosion in the inside of dwelling house over a long period of time.

In order to attain the foregoing objects, the present inventors made extensive and intensive investigations. As a result, it has been found that by laminating a specific film-like material on the back surface of a substrate of a pressure-sensitive adhesive tape, even in the case of sticking the pressure-sensitive adhesive tape to a curved surface shape part or a three-dimensional shape part, sticking application works of the pressure-sensitive adhesive tape can be easily carried out upon elongation while preventing self adhesion of the back surface of the pressure-sensitive adhesive tape (the matter that when the pressure-sensitive adhesive tape is folded at the time of sticking such that the back surfaces come into contact with each other, the back surfaces cause adhesion and self adhesion to each other) and that in a joint part of the pressure-sensitive adhesive tape after the application or an overlap of a terminal part, adhesive properties of the pressure-sensitive adhesive tape is ensured so that good waterproof properties and airtightness can be kept over a long period of time. The invention has been accomplished on the basis of such knowledge.

Specifically, the invention is concerned with a waterproof and airtight pressure-sensitive adhesive tape comprising a substrate and a pressure-sensitive adhesive layer on one surface thereof, wherein the substrate is a rubber-made sheet; and a film-like material having elongation properties is laminated on a surface in the opposite side to the pressure-sensitive adhesive layer of the substrate.

In the invention, it is preferable that the rubber-made sheet as the substrate has an elongation at the time of breakage (distance between two gage marks: 40 mm, drawing rate: 300 mm/min) of from 200 to 1,200 % in both the longitudinal direction and the cross direction and a stress under 100 % elongation (distance between two gage marks: 40 mm, drawing rate: 50 mm/min) of from 10 to 100 N/cm² in both the longitudinal direction and the cross direction. Also, it is preferable that the film-like material having elongation properties has an elongation at the time of breakage (distance between two gage marks: 40 mm, drawing rate: 300 mm/min) of from 200 to 1, 200 % in both the longitudinal direction and the cross direction.

It is preferable that the surface of the film-like material having elongation properties in the side coming into contact with the substrate is a surface capable of exhibiting a release function. Such a surface capable of exhibiting a release function may be a surface of a release treatment coating film layer or a coating film layer having non-self adhesive properties. The release treatment coating film layer can be formed of a silicone-based release treating agent. Also, the coating film layer having non-self adhesive properties can be formed of a coating film-forming composition containing an acrylic polymer or a long chain alkyl-based compound.

Also, the rubber-made sheet may be constructed of a rubber composition containing a synthetic rubber as the major component. As the synthetic rubber, at least one synthetic rubber selected from a butyl rubber, an ethylene-propylene rubber and an ethylene-propylene-diene rubber can be suitably used.

### BRIEF DESCRIPTION OF THE DRAWINGS

Fig. 1 is a schematic cross-sectional view to show a part of an example of the waterproof and airtight pressure sensitive adhesive tape of the invention.
Fig. 2 is a schematic view to show a method of subjecting a pressure-sensitive adhesive tape to sticking to the circumference of a shaped portion by a method of evaluating sticking application properties in the Examples.

### [Description of Reference Numerals and Sings]

- 1:: Waterproof and airtight pressure-sensitive adhesive tape
- 2:: Rubber-made sheet
- 3:: Pressure-sensitive adhesive layer
- 4:: Elongating film-like material
- 5:: Separator
- 6:: Body (plywood board)
- 7:: Water feed/discharge pipe
- 8:: Pressure-sensitive adhesive tape

### DETAILED DESCRIPTION OF THE INVENTION

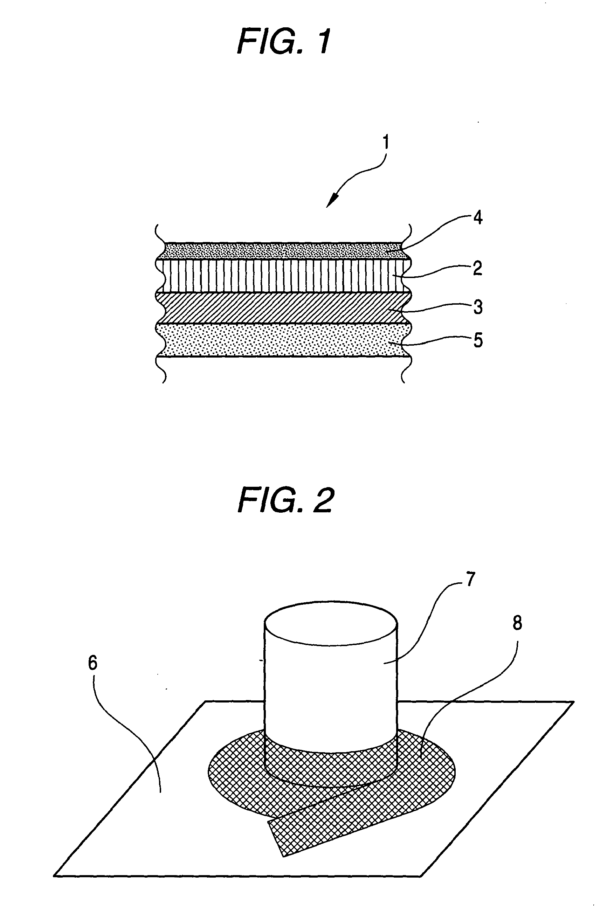

As illustrated in Fig. 1, the waterproof and airtight pressure-sensitive adhesive tape of the invention has a construction in which a rubber-made sheet is used as a substrate; a pressure-sensitive adhesive layer is formed on one surface of the rubber-made sheet; and a film-like material having elongation properties (hereinafter sometimes referred to as "elongating film-like material") is laminated on a surface (back surface) in the opposite side to the pressure-sensitive adhesive layer of the substrate. Fig. 1 is a schematic cross-sectional view to partially show an example of the waterproof and airtight pressure-sensitive adhesive tape of the invention. In Fig. 1, 1 denotes a waterproof and airtight pressure-sensitive adhesive tape; 2 denotes a rubber-made sheet; 3 denotes a pressure-sensitive adhesive layer; 4 denotes a film-like material having elongation properties (elongating film-like material); and 5 denotes a separator. The waterproof and airtight pressure-sensitive adhesive tape 1 as illustrated in Fig. 1 has a construction in which the pressure-sensitive adhesive layer 3 is formed on one surface of the rubber-made sheet 2; the elongating film-like material 4 is formed on the other surface; and the pressure-sensitive adhesive layer 3 is protected by the separator 5.

### (Elongating film-like material)

It is important that the elongating film-like material has elongation properties and has a film-like form. Since the elongating film-like material is formed on the back surface in the rubber-made sheet as the substrate (the surface in the opposite side to the pressure-sensitive adhesive layer), it is preferable that the elongating film-like material has elongation properties such that when the rubber-made sheet as the substrate is expanded and elongated, it can follow the elongation of the rubber-made sheet. Accordingly, for example, it is preferable that the elongating film-like material has an elongation at the time of breakage (distance between two gage marks: 40 mm, drawing rate: 300 mm/min) of from 200 to 1,200 % (preferably from 300 to 1,200 %, and more preferably from 500 to 1,200 %) in both the longitudinal direction and the cross direction. When the elongation at the time of breakage of the elongating film-like material is too low, the elongating film-like material is inferior in elongation properties so that there is some possibility that it cannot follow the elongation of the rubber-made sheet.

Incidentally, in the invention, the elongation at the time of breakage of the elongating film-like material is defined as a value which is measured by a method as described later.

As such an elongating film-like material, thermoplastic resin-made films having elongation properties can be suitably used. As a thermoplastic resin which constructs the elongating film-like material, there can be suitably used polyolefin-based resins such as polyethylene (for example, low density polyethylene, medium density polyethylene, high density polyethylene, linear low density polyethylene, and ultra-low density polyethylene), polypropylene, copolymers of ethylene and propylene (ethylene-propylene copolymers), copolymers of ethylene or propylene and other α-olefin (for example, butene-1, pentene-1, hexene-1, and 4-methylpentene-1), and copolymers of ethylene and other ethylenically unsaturated monomer (for example, vinyl acetate, acrylic acid, acrylic esters, methacrylic acid, methacrylic esters, and vinyl alcohol). As the thermoplastic resin, other thermoplastic resins (for example, polyvinyl chloride-based resins and polyester-based resins) can also be used so far as they have elongation properties. The thermoplastic resin can be used singly or in combination of two or more kinds thereof. Incidentally, in the case where the thermoplastic resin is a copolymer, all random copolymers and block copolymers are employable.

As the polyolefin-based resin, polyethylene, polypropylene, and ethylene-propylene copolymers are preferable. Above all, polyethylene and a mixture of polyethylene and polypropylene (especially, polyethylene) can be suitably used.

When the elongating film-like material is formed of a polyolefin-based resin such as polyethylene and a mixture of polyethylene and polypropylene, not only it has elongation properties, but also it is able to be formed in a thin film-like form having a thin thickness and to be controlled with respect to a stress at the time of elongation (for example, a residual stress) in a low level.

Incidentally, it is important that such an elongating film-like material has non-adhesive properties such that when elongating film-like materials come into contact with each other and are superimposed, it does not cause self adhesion. For that reason, it is preferable that the elongating film-like material does not have tackiness.

The thickness of the elongating film-like material is not particularly limited and can be properly chosen within the range of, for example, from 0.005 to 0.5 mm. The thickness is preferably from 0.02 to 0.100 mm (more preferably from 0. 025 to 0.06 mm). When the thickness of the elongating film-like material is too thick, in elongating the waterproof and airtight pressure-sensitive adhesive tape, a necessary stress becomes high so that the application properties are lowered. On the other hand, when it is too thin, the strength is lowered so that the waterproof and airtight pressure-sensitive adhesive tape is liable to be damaged and may be possibly cracked due to the elongation at the time of application.

For example, the elongating film-like material can be produced while utilizing a known film forming method such as a film forming method using an extruder or a calender roll (especially, a T-type extruder). For example, in the case where the elongating film-like material is formed of a polyolefin-based resin such as polyethylene and a mixture of polyethylene and polypropylene, the elongating film-like material can be produced by extrusion molding at a molding temperature of from 200 to 250°C.

The elongating film-like material may contain a lubricant, a pigment, a filler, and other additives as the need arises.

In the waterproof and airtight pressure-sensitive adhesive tape of the invention, in general, the rubber-made sheet as the substrate has viscosity. Accordingly, by using rubber-made pressure rolls or the like, the elongating film-like material can be laminated on the rubber-made sheet easily and in a stuck state to the extent that it is not peeled away from the rubber-made sheet at the time of elongation during the application. Moreover, in the case where the elongating film-like material is constructed of a polyolefin-based resin such as polyethylene and a mixture of polyethylene and polypropylene, the elongating film-like material made of a polyolefin-based resin is low in pressure-sensitive adhesive properties or adhesive properties to the rubber-made sheet and low in the peel force after the application so that it is possible to peel away the elongating film-like material from the rubber-made sheet. However, there may be the case that the peel force is slightly different depending upon the kind of the polyolefin-based resin and the kind and content of additives which are contained as the need arises, such as a lubricant.

In the invention, after applying the waterproof and airtight pressure-sensitive adhesive tape, the elongating film-like material may be laminated on the rubber-made sheet as the substrate as it is without being peeled away or may be peeled away from the rubber-made sheet as the substrate. For example, in the case where the waterproof and airtight pressure-sensitive adhesive tape may possibly be peeled away due to a residual stress of the elongating film-like material, it is preferable that after the application using the waterproof and airtight pressure-sensitive adhesive tape, the elongating film-like material is peeled away. Incidentally, in peeling away the elongating film-like material from the rubber-made sheet in this way, for example, in the case where the elongating film-like material (especially, an elongating film-like material having a thin thickness) is laminated in a well stuck or adhered state to the rubber-made sheet, when the elongating film-like material is peeled away from the rubber-made sheet, peeling in a portion at which the peeling is started may possibly become difficult. In that case, there may be the case where by sticking a pressure-sensitive adhesive tape or sheet of every kind such as packaging pressure-sensitive adhesive tapes or sheets onto an elongating film-like material in the site at which the peeling is started and utilizing it, it is possible to easily peel away the elongating film-like material from the rubber-made sheet.

In the case where the elongating film-like material is laminated on the rubber-made sheet in a stuck state even after applying the waterproof and airtight pressure-sensitive adhesive tape, the surface in the side coming into contact with the substrate may be a surface of the elongating film-like material itself with no other layer being formed thereon, or may be a surface capable of exhibiting adhesive properties. Accordingly, with respect to the elongating film-like material, for example, a pressure-sensitive adhesive layer or an adhesive layer may be formed on the surface in the side coming into contact with the substrate as the need arises. A pressure-sensitive adhesive or an adhesive which constructs such a pressure-sensitive adhesive layer or adhesive layer is not particularly limited and can be chosen and used among known pressure-sensitive adhesives or adhesives. Specific examples of the pressure-sensitive adhesive include pressure-sensitive adhesives as enumerated below as the pressure-sensitive adhesive which constructs the pressure-sensitive adhesive layer formed on one surface of the substrate.

On the other hand, with respect to the elongating film-like material, in the case where after applying the waterproof and airtight pressure-sensitive adhesive tape, the elongating film-like material is peeled away from the rubber-made sheet, the surface in the side coming into contact with the substrate may be a surface of the elongating film-like material itself with no other layer being formed thereon, or may be a surface capable of exhibiting a release function. Accordingly, with respect to the elongating film-like material, for example, a release treatment coating film layer or a coating film layer having non-self adhesive properties may be formed on the surface in the side coming into contact with the substrate as the need arises. In this way, when the elongating film-like material is able to exhibit a release function, after sticking the elongating film-like material onto the rubber-made sheet as the substrate, the elongating film-like material can be easily peeled away from the substrate at an arbitrary stage.

In the elongating film-like material, the release treatment coating film layer is a layer constructed of a release treating agent (release treating agent layer). A release treating agent which constructs the release treatment coating film layer is not particularly limited and can be properly chosen and used among known release treating agents. Specific examples of the release treating agent include silicone-based release treating agents, fluorine-based release treating agents, and long chain alkyl-based release treating agents. The release treating agent can be used singly or in combination of two or more kinds thereof. As the release treating agent, silicone-based release treating agents can be suitably used.

The coating film layer having non-self adhesive properties (hereinafter sometimes referred to as "non-self adhesive coating film layer") is a layer which is constructed of a coating film-forming composition and which has non-self adhesive properties. The coating film-forming composition (raw material or material) which constructs the non-self adhesive coating film layer is not particularly limited so far as it is able to cover the surface of the elongating film-like material and to exhibit non-self adhesive properties. For example, the non-self adhesive coating film layer can be formed of a coating film-forming composition containing an acrylic polymer or a long chain alkyl-based compound, a coating film-forming composition containing a component which is used for the preparation of an acrylic polymer or a long chain alkyl-based compound (for example, a monomer component), or the like. The coating film-forming composition which forms the non-self adhesive coating film layer can be used singly or in combination of two or more kinds thereof.

As the acrylic polymer, (meth)acrylic alkyl ester-based polymers containing at least a (meth)acrylic alkyl ester as a monomer component are suitable. Specific examples of the (meth) acrylic alkyl ester include (meth) acrylic C₁₋₂₀-alkyl esters such as methyl (meth)acrylate, ethyl (meth)acrylate, propyl (meth) acrylate, isopropyl (meth) acrylate, n-butyl (meth) acrylate, isobutyl (meth)acrylate, s-butyl (meth)-acrylate, t-butyl (meth) acrylate, pentyl (meth) acrylate, hexyl (meth)acrylate, heptyl (meth)acrylate, octyl (meth)-acrylate, 2-ethylhexyl (meth)acrylate, isooctyl (meth)-acrylate, nonyl (meth) acrylate, isononyl (meth) acrylate, decyl (meth) acrylate, isodecyl (meth)acrylate, undecyl (meth) acrylate, dodecyl (meth)acrylate, tridecyl (meth)-acrylate, tetradecyl (meth)acrylate, pentadecyl (meth)-acrylate, hexadecyl (meth)acrylate, heptadecyl (meth)-acrylate, octadecyl (meth)acrylate, nonadecyl (meth)acrylate, and eicosyl (meth) acrylate. The (meth) acrylic alkyl ester as the monomer component can be used singly or in combination of two or more kinds thereof.

In the acrylic polymer, a monomer component which is copolymerizable with the (meth)acrylic alkyl ester (copolymerizable monomer component) may be used together with the (meth) acrylic alkyl ester. Examples of such a copolymerizable monomer component include carboxyl group-containing monomers such as (meth) acrylic acid (acrylic acid and methacrylic acid), itaconic acid, maleic acid, fumaric acid, crotonic acid, and isocrotonic acid or anhydrides thereof (for example, maleic anhydride and itaconic anhydride); maleic acid (mono- or di-) esters such as monomethyl maleate, monoethyl maleate, and diethyl maleate; fumaric acid (mono- or di-)esters such as monomethyl fumarate and monoethyl fumarate; aromatic vinyl compounds such as styrene and substituted styrenes; hydroxyl group-containing monomers such as (meth)acrylic hydroxyalkyls (for example, hydroxyethyl (meth) acrylate and hydroxypropyl (meth)acrylate) and glycerin dimethacrylate; epoxy group-containing monomers such as glycidyl (meth) acrylate and methylglycidyl (meth)acrylate; cyano group-containing monomers such as acrylonitrile and methacrylonitrile; amide group-containing monomers such as acrylamide, methacrylamide, N-vinylpyrrolidone, and N,N-dimethyl (meth)acrylamide; amino group-containing monomers such as aminoethyl (meth)acrylate and (meth)acryloyl morpholine; imide group-containing monomers such as cyclohexyl maleimide and isopropyl maleimide; vinyl esters such as vinyl acetate; vinyl alcohols such as vinyl alcohol; vinyl ethers such as vinyl alkyl ethers; vinyl chloride; olefins such as ethylene and propylene; dienes such as butadiene, isoprene, and isobutylene; and sulfonic acid group-containing monomers such as sodium vinylsulfonate. The copolymerizable monomer component can be used singly or in combination of two or more kinds thereof.

Specifically, polybutyl methacrylate and an octadecyl methacrylate-acrylonitrile copolymer are suitable as the acrylic polymer.

On the other hand, the long chain alkyl-based compound is not particularly limited. For example, reaction products between polyvinyl alcohol and a long chain alkyl isocyanate having from 10 to 20 carbon atoms such as stearyl isocyanate can be used.

In general, a material which is used as a releasing agent (release treating agent) is included in the materials which are used in the non-self adhesive coating film layer. However, by properly choosing a combination with a pressure-sensitive adhesive (for example, a butyl rubber-based pressure-sensitive adhesive exhibits adhesive properties to a coating film layer made of an octadecyl methacrylate-acrylonitrile copolymer) or the like, a coating film layer made of a general releasing agent can be utilized as the non-self adhesive coating film layer.

In the non-self adhesive coating film layer, besides the acrylic polymer or long chain alkyl-based compound or the component for preparing an acrylic polymer or a long chain alkyl-based compound (for example, a monomer component), adequate additives such as a filler, a colorant, an ultraviolet absorber, an antioxidant, and an antistatic agent may be blended in proper amounts in the coating film-forming composition.

A method for forming the release treatment coating film layer or non-self adhesive coating film layer which is formed on the elongating film-like material is not particularly limited. For example, the release treatment coating film layer or non-self adhesive coating film layer can be formed by coating a release treating agent or a coating film-forming composition on a prescribed surface of an elongating film-like material, followed by drying or curing as the need arises. Incidentally, the release treating agent or coating film-forming composition may have a liquid state or a molten state. For example, in the case where the coating film-forming composition has a liquid state or a molten state or in the case where the coating film-forming composition contains a monomer component for preparing an acrylic polymer, by coating and subsequently drying or curing by a heat treatment or the like, it is possible to form the non-self adhesive coating film layer.

Incidentally, the thickness of the release treatment coating film layer or non-self adhesive coating film layer which is formed on the elongating film-like material is not particularly limited and can be properly set up.

### (Substrate)

The substrate is formed of a rubber-made sheet. A raw material or a material of the rubber-made sheet is not particularly limited, and various kinds of rubber compositions (for example, rubber compositions containing a synthetic rubber or a natural rubber) can be used. It is preferable that the rubber-made sheet is constructed of a rubber composition containing a synthetic rubber as the major component. Such a synthetic rubber is not particularly limited, and examples thereof include a butyl rubber, a polyisoprene rubber, a polyisobutylene rubber, a chloroprene rubber, a nitrile butyl rubber, an ethylene-propylene rubber (EPT), an ethylene-propylene-diene rubber (EPDM), a polybutene rubber, a chlorinated polyethylene rubber, a styrene-butadiene (SB) rubber, a styrene-isoprene (SI) rubber, a styrene-isoprene-styrene block copolymer (SIS) rubber, a styrene-butadiene-styrene block copolymer (SBS) rubber, a styrene-ethylene-butylene-styrene block copolymer (SEBS) rubber, a styrene-ethylene-propylene-styrene block copolymer (SEPS) rubber, and a styrene-ethylene-propylene block copolymer (SEP) rubber. The synthetic rubber can be used singly or in combination of two or more kinds thereof.

A butyl rubber, an ethylene-propylene rubber, and an ethylene-propylene-diene rubber can be suitably used as the synthetic rubber. Of these, a butyl rubber is especially preferable.

Besides the rubber component (for example, a synthetic rubber), adequate additives such as a softener, a filler, a colorant, an ultraviolet absorber, an antioxidant, and an antistatic agent may be blended in proper amounts in the rubber composition.

The rubber-made sheet can be prepared by utilizing a known forming method (for example, an extrusion molding method and a calender molding method).

Incidentally, rubber-made sheets made of an unvulcanized rubber are suitable as the rubber-made sheet.

The thickness of the rubber-made sheet as the substrate is not particularly limited and can be properly chosen within the range of, for example, 0.1 mm or more (for example, from 0. 1 to 3.0 mm). The thickness is preferably from 0.4 to 2.0 mm (more preferably from 0.5 to 1.5 mm) . When the thickness of the rubber-made sheet is too thin, the pressure-sensitive adhesive tape becomes weak against a shock, whereas when it is too thick, a force necessary for elongating the pressure-sensitive adhesive tape becomes large.

From the viewpoint of elongation properties of the waterproof and airtight pressure-sensitive adhesive tape, it is preferable that the rubber-made sheet as the substrate has characteristics such that its elongation at the time of breakage (distance between two gage marks: 40 mm, drawing rate: 300 mm/min) is from 200 to 1,200 % in both the longitudinal direction and the cross direction and that its stress under 100 % elongation (distance between two gage marks: 40 mm, drawing rate: 50 mm/min) is from 10 to 100 N/cm² in both the longitudinal direction and the cross direction.

In the rubber-made sheet, the elongation at the time of breakage (distance between two gage marks: 40 mm, drawing rate: 300 mm/min; hereinafter sometimes referred to as "elongation at break") is not particularly limited so far as it is from 200 to 1,200 % in both the longitudinal direction (lengthwise direction or machine direction; so-called "MD direction") and the cross direction (transverse direction; so-called "TD direction"). The elongation at break is preferably from 300 to 1,200 % (more preferably from 500 to 1,200 %). Incidentally, when the elongation at break of the rubber-made sheet is less than 200 % in at least one direction of the MD direction and the TD direction, the elongation properties are lowered in sticking the waterproof and airtight pressure-sensitive adhesive tape, whereas when it exceeds 1,200 %, cutting is liable to occur in elongating and sticking the waterproof and airtight pressure-sensitive adhesive tape.

Incidentally, such an elongation at break may be identical or different in both the MD direction and the TD direction. In many cases, the elongation at break in the TD direction is larger than that in the MD direction. For example, the elongation at break in the MD direction may be from 200 to 1,000 % (preferably from 300 to 900 %, and more preferably from 500 to 800 %), whereas the elongation at break in the TD direction may be from 300 to 1,200 % (preferably from 500 to 1,200 %, and more preferably from 700 to 1,200 %).

In the rubber-made sheet, the stress under 100 % elongation (distance between two gage marks: 40 mm, drawing rate: 50 mm/min; hereinafter sometimes referred to as "100 % tensile deforming stress") is not particularly limited so far as it is from 10 to 100 N/cm² in both the longitudinal direction (lengthwise direction or machine direction; so-called "MD direction") and the cross direction (transverse direction; so-called "TD direction"). The 100 % tensile deforming stress is preferably from 10 to 80 N/cm² (more preferably from 10 to 70 N/cm²). Incidentally, when the 100 % tensile deforming stress of the rubber-made sheet is less than 10 N/cm² in at least one direction of the MD direction and the TD direction, the adhesiveness is lowered in sticking the waterproof and airtight pressure-sensitive adhesive tape, whereas when it exceeds 100 N/cm², after elongating and sticking the waterproof and airtight pressure-sensitive adhesive tape, the generation of wrinkle, cutting, peeling, etc. is liable to occur due to the deforming stress.

Incidentally, such a 100 % tensile deforming stress may be identical or different in both the MD direction and the TD direction. In many cases, the 100 % tensile deforming stress in the MD direction is larger than that in the TD direction. For example, the 100 % tensile deforming stress in the MD direction may be from 12 to 100 N/cm² (preferably from 15 to 80 N/cm², and more preferably from 20 to 70 N/cm²), whereas the 100 % tensile deforming stress in the TD direction may be from 10 to 80 N/cm² (preferably from 10 to 50 N/cm², and more preferably from 10 to 30 N/cm²).

### (Pressure-sensitive adhesive layer)

In the waterproof and airtight pressure-sensitive adhesive tape of the invention, a pressure-sensitive adhesive layer is formed on one surface of a substrate made of a rubber-made sheet. A pressure-sensitive adhesive which constructs such a pressure-sensitive adhesive layer is not particularly limited. For example, known pressure-sensitive adhesives such as rubber-based pressure-sensitive adhesives, acrylic pressure-sensitive adhesives, polyester-based pressure-sensitive adhesives, urethane-based pressure-sensitive adhesives, polyamide-based pressure-sensitive adhesives, epoxy-based pressure-sensitive adhesives, vinyl alkyl ether-based pressure-sensitive adhesives, silicone-based pressure-sensitive adhesives, and fluorine-based pressure-sensitive adhesives can be used. The pressure-sensitive adhesive may also be a hot melt type pressure-sensitive adhesive. The pressure-sensitive adhesive can be used singly or in combination of two or more kinds thereof. The pressure-sensitive adhesive may also be a pressure-sensitive adhesive in any form including an emulsion-based pressure-sensitive adhesive, a solvent-based pressure-sensitive adhesive, an oligomer-based pressure-sensitive adhesive, and a solid-based pressure-sensitive adhesive.

Incidentally, the pressure-sensitive adhesive may contain proper additives such as a crosslinking agent (for example, a polyisocyanate-based crosslinking agent and an alkyl etherified melamine compound-based crosslinking agent), a tackifier (for example, a rosin derivative resin, a polyterpene resin, a petroleum resin, and a phenol resin), a plasticizer, a filler, and an anti-aging agent in addition to the polymer component such as the pressure-sensitive adhesive component (base polymer) depending upon the kind of the pressure-sensitive adhesive, etc.

A rubber-based pressure-sensitive adhesive is suitable as the pressure-sensitive adhesive. For example, the rubber-based pressure-sensitive adhesive may be any of a natural rubber-based pressure-sensitive adhesive containing a natural rubber as the base polymer or a synthetic rubber-based pressure-sensitive adhesive containing a synthetic rubber as the base polymer. Of these, a synthetic rubber-based pressure-sensitive adhesive is preferable. Examples of a synthetic rubber in such a synthetic rubber-based pressure-sensitive adhesive include a butyl rubber, a polyisoprene rubber, a polyisobutylene rubber, a styrene-butadiene (SB) rubber, a styrene-isoprene (SI) rubber, a styrene-isoprene-styrene block copolymer (SIS) rubber, a styrene-butadiene-styrene block copolymer (SBS) rubber, a styrene-ethylene-butylene-styrene block copolymer (SEBS) rubber, a styrene-ethylene-propylene-styrene block copolymer (SEPS) rubber, a styrene-ethylene-propylene block copolymer (SEP) rubber, a regenerated rubber, and modified materials thereof. Of these, a butyl rubber is especially preferable. That is, a butyl rubber-based pressure-sensitive adhesive is optimum as the pressure-sensitive adhesive.

As a method of forming the pressure-sensitive adhesive layer, known or customary forming methods can be employed, and a method of molding a pressure-sensitive adhesive into a sheet-like form by an extruder or a calender roll and sticking it onto a rubber-made sheet can be suitably employed. Also, a method of coating the pressure-sensitive adhesive on the surface of a rubber-made sheet as the substrate (coating method) and a method of coating the pressure-sensitive adhesive on a release film such as a release liner to form a pressure-sensitive adhesive layer and then transferring the pressure-sensitive adhesive layer onto a rubber-made sheet as the substrate (a transfer method) can be employed.

The thickness of the pressure-sensitive adhesive layer is not particularly limited. For example, the thickness can be chosen within the range of from 0.1 to 3 mm (preferably from 0.2 to 2 mm, and more preferably from 0.3 to 1 mm).

### (Separator)

In the waterproof and airtight pressure-sensitive adhesive tape 1 as illustrated in Fig. 1, the pressure-sensitive adhesive layer 3 is protected by the separator 5. The separator 5 is used as the need arises so that it can be arbitrarily provided. The separator (release liner) is not particularly limited, and known separators can be properly chosen and used.

### (Waterproof and airtight pressure-sensitive adhesive tape)

As described previously, the waterproof and airtight pressure-sensitive adhesive tape of the invention has a construction in which a pressure-sensitive adhesive layer is formed on one surface of a rubber-made sheet as a substrate and an elongating film-like material is laminated on the other surface (surface in the opposite side to the pressure-sensitive adhesive layer). For example, the waterproof and airtight pressure-sensitive adhesive tape can be prepared by blending additives such as a softener and a filler in proper amounts in a rubber component such as a synthetic rubber and mixing by a mixing machine such as a mixing roll, a kneader, and a Banbury mixer to prepare a rubber composition; molding the rubber composition into a sheet-like form by using a calender roll, an extruder, etc. to prepare a rubber-made sheet; adhering a sheet-like pressure-sensitive adhesive layer as obtained by extrusion molding by an extruder or molding by a calender roll onto a prescribed surface (surface to be the pressure-sensitive adhesive surface) of the rubber-made sheet; superimposing a separator one surface or both surfaces of which are a mold releasing treated surface on the surface of the pressure-sensitive adhesive layer; and then laminating an elongating film-like material as obtained by extrusion molding by an extruder or molding by a calender roll on the other surface (surface in the back surface side against the pressure-sensitive adhesive layer) of the rubber-made sheet in an intimate contact state by using pressure rolls (especially, rubber-made pressure rolls). In addition, if desired, by winding up the waterproof and airtight pressure-sensitive adhesive tape in a rolled form, it is possible to prepare a waterproof and airtight pressure-sensitive adhesive tape as wound in a rolled form.

Incidentally, in the case where the elongating film-like material is an elongating film-like material made of a polyolefin-based resin such as polyethylene and a mixture of polyethylene and polypropylene, for example, a polyolefin-based resin-made sheet having elongation properties can be formed by optionally adding proper amounts of additives such as a lubricant, a pigment, and a filler to a polyolefin-based resin component such as polyethylene and a mixture of polyethylene and polypropylene and mixing by a mixing machine (for example, a mixing roll and a kneader) to prepare a polyolefin-based resin composition and molding the polyolefin-based resin composition by an extruder or a calender roll.

In the case where the pressure-sensitive adhesive layer is a pressure-sensitive adhesive layer made of a rubber-based pressure-sensitive adhesive, for example, a sheet-like pressure-sensitive adhesive layer can be formed by adding proper amounts of additives such as a softener, a filler, and a tackifier to a rubber component such as a butyl rubber and mixing by a mixing machine (for example, a mixing roll and a kneader) to prepare a rubber-based pressure-sensitive adhesive (especially, a butyl rubber-based pressure-sensitive adhesive) and then molding the rubber-based pressure-sensitive adhesive by an extruder or a calender roll. As a matter of course, as described previously, the pressure-sensitive adhesive layer can be formed by coating a pressure-sensitive adhesive composition in a solution state or in a molten state on a prescribed surface of a rubber-made sheet or coating it on a release film and then transferring onto a prescribed surface of a rubber-made sheet.

It is preferable that the waterproof and airtight pressure-sensitive adhesive tape of the invention has characteristics such that its elongation at the time of breakage (distance between two gage marks: 40 mm, drawing rate: 300 mm/min) is from 200 to 1,200 % in both the longitudinal direction (MD direction) and the cross direction (TD direction) and that its stress under 100 % elongation (distance between two gage marks: 40 mm, drawing rate: 50 mm/min) is from 10 to 100 N/cm² in both the longitudinal direction (MD direction) and the cross direction (TD direction).

In the waterproof and airtight pressure-sensitive adhesive tape, the elongation at the time of breakage (distance between two gage marks: 40 mm, drawing rate: 300 mm/min; hereinafter sometimes referred to as "elongation at break") in both the longitudinal direction (lengthwise direction or machine direction; so-called "MD direction") and the cross direction (transverse direction; so-called "TD direction") is preferably from 200 to 1,200 %, and more preferably from 300 to 1,200 % (especially from 500 to 1, 200 %). Incidentally, when the elongation at break of the waterproof and airtight pressure-sensitive adhesive tape is less than 200 % in at least one direction of the MD direction and the TD direction, the elongation properties are lowered in sticking the waterproof and airtight pressure-sensitive adhesive tape, whereas when it exceeds 1,200 %, cutting is liable to occur in elongating and sticking the waterproof and airtight pressure-sensitive adhesive tape.

Incidentally, the elongation at break of the waterproof and airtight pressure-sensitive adhesive tape may be identical or different in both the MD direction and the TD direction. In many cases, the elongation at break in the TD direction is larger than that in the MD direction. For example, the elongation at break in the MD direction may be from 200 to 1,000 % (preferably from 300 to 900 %, and more preferably from 500 to 800 %), whereas the elongation at break in the TD direction may be from 300 to 1,200 % (preferably from 500 to 1,200 %, and more preferably from 700 to 1,200 %).

In the waterproof and airtight pressure-sensitive adhesive tape, the elongation at break can be determined in such a manner that a waterproof and airtight pressure-sensitive adhesive tape is punched into a specimen of a dumbbell shape No. 1 as defined in JIS K6251 (test width: 10 mm, distance between two gage marks: 40 mm) in each of the longitudinal direction and the cross direction of the waterproof and airtight pressure-sensitive adhesive tape; and according to JIS Z0237, by using a tensile tester the crosshead side of the specimen is drawn at a rate of 300 mm/min under conditions of a distance between two gage marks of the specimen of 40 mm and a width of the specimen (test width) of 10 mm, thereby measuring an elongation at the time when the specimen is broken.

In the waterproof and airtight pressure-sensitive adhesive tape, the stress under 100 % elongation (distance between two gage marks: 40 mm, drawing rate: 50 mm/min; hereinafter sometimes referred to as "100 % tensile deforming stress") in both the longitudinal direction (lengthwise or machine direction; so-called "MD direction") and the cross direction (transverse direction; so-called "TD direction") is preferably from 10 to 100 N/cm², and more preferably from 10 to 80 N/cm² (especially from 10 to 70 N/cm²). Incidentally, when the 100 % tensile deforming stress of the waterproof and airtight pressure-sensitive adhesive tape is less than 10 N/cm² in at least one direction of the MD direction and the TD direction, adhesiveness in sticking the waterproof and airtight pressure-sensitive adhesive tape is lowered, whereas when it exceeds 100 N/cm², the generation of wrinkle, cutting, peeling, etc. is liable to occur due to the deforming stress after elongating and sticking the waterproof and airtight pressure-sensitive adhesive tape.

Incidentally, the 100 % tensile deforming stress of the waterproof and airtight pressure-sensitive adhesive tape may be the same size or a different size in both the MD direction and the TD direction. With respect to the 100 % tensile deforming stress, in many cases, the 100 % tensile deforming stress in the MD direction is larger than that in the TD direction. For example, the 100 % tensile deforming stress in the MD direction may be from 12 to 100 N/cm² (preferably from 15 to 80 N/cm², and more preferably from 20 to 70 N/cm²), whereas the 100 % tensile deforming stress in the TD direction may be from 10 to 80 N/cm² (preferably from 10 to 50 N/cm², and more preferably from 10 to 30 N/cm²).

In the waterproof and airtight pressure-sensitive adhesive tape, the 100 % tensile deforming stress is a value calculated in such a manner that a waterproof and airtight pressure-sensitive adhesive tape is punched into a specimen of a dumbbell shape No. 1 as defined in JIS K6251 (test width: 10 mm, distance between two gage marks: 40 mm) in each of the longitudinal direction and the cross direction of the waterproof and airtight pressure-sensitive adhesive tape; according to JIS K6254, by using a tensile tester, the crosshead side of the specimen is drawn at a rate of 50 mm/min under conditions of a distance between two gage marks of the specimen of 40 mm and a width of the specimen (test width) of 10 mm, and at a point of time when the specimen is drawn with 100 %, the drawing is stopped, thereby measuring a load at this time; and the measured load value is divided by a cross-sectional area of the specimen [(thickness of specimen) × (width of specimen)] before drawing.

In the waterproof and airtight pressure-sensitive adhesive tape, the elongation at break and the 100 % tensile deforming stress can be adjusted by controlling physical properties (for example, elongation at break and 100 % tensile deforming stress) of the rubber-made sheet as a substrate and the physical properties of the elongating film-like material laminated on the rubber-made sheet. For example, when a rubber-made sheet having such characteristics that not only its elongation at the time of breakage (distance between two gage marks: 40 mm, drawing rate: 300 mm/min) is from 200 to 1,200 % in both the MD direction and the TD direction, but also its stress under 100 % elongation (distance between two gage marks: 40 mm, drawing rate: 50 mm/min) is from 10 to 100 N/cm² in both the MD direction and the TD direction is used as the rubber-made sheet as a substrate and an elongating film-like material having such characteristics that not only its elongation at the time of breakage (distance between two gage marks: 40 mm, drawing rate: 300 mm/min) is from 200 to 1,200 % in both the MD direction and the TD direction, but also its stress under 100 % elongation (distance between two gage marks: 40 mm, drawing rate: 50 mm/min) is les than 10 N/cm² in both the MD direction and the TD direction is used as the elongating film-like material laminated on the rubber-made sheet, it is possible to prepare a waterproof and airtight pressure-sensitive adhesive tape having the foregoing elongation at break and 100 % tensile deforming stress.

Incidentally, the elongation at break and 100 % tensile deforming stress of the rubber-made sheet and the elongation at break and 100 % tensile deforming stress of the elongating film-like material can be measured in the same manner as in the elongation at break and 100 % tensile deforming stress of the waterproof and airtight pressure-sensitive adhesive tape.

As described previously, in the waterproof and airtight pressure-sensitive adhesive tape of the invention, the elongating film-like material is laminated on the back surface of the substrate. Accordingly, for example, even in the case of carrying out folding such that the back surfaces of substrates come into contact with each other at the time of application, adhesion or self adhesion between the back surfaces is prevented from occurring. Furthermore, even when the surface of the substrate is uneven, not only the back surface of the substrate is a smooth flat plane due to the elongating film-like material, but also it can be utilized as a surface onto which the pressure-sensitive adhesive layer can be adhered. Moreover, by making the waterproof and airtight pressure-sensitive adhesive tape have adequate elongation at break and 100 % tensile deforming stress, not only it is possible to stick the waterproof and airtight pressure-sensitive adhesive tape by properly drawing it, but also even when the waterproof and airtight pressure-sensitive adhesive tape is stuck in the elongated state, it is possible to effectively keep that state over a long period of time.

Accordingly, even in the case where the waterproof and airtight pressure-sensitive adhesive tape is stuck to a curved line shape or a three-dimensional shape such as openings and shaped portions (for example, external angles and convexes), since the waterproof and airtight pressure-sensitive adhesive tape can be folded in a state that the back surfaces come into contact with each other or can be stuck while being properly drawn, it can be easily stuck. Also, even when the waterproof and airtight pressure-sensitive adhesive tape is stuck in a drawn and elongated state, the generation of wrinkle, cutting, peeling, etc. due to a deforming stress is prevented so that the elongated state can be effectively kept. In addition, even when the pressure-sensitive adhesive layer of the pressure-sensitive adhesive tape is superimposed on the back surface of the substrate and stuck thereonto, it can be stuck with excellent adhesive properties. Also, in an overlap of a joint part of the pressure-sensitive adhesive tape after sticking or an overlap of a terminal part, adhesive properties of the pressure-sensitive adhesive tape can be ensured. For that reason, when the waterproof and airtight pressure-sensitive adhesive tape of the invention is used, even if the sticking site has a curved line shape or a three-dimensional shape, the sticking work can be carried out simply. For example, the waterproof and airtight pressure-sensitive adhesive tape of the invention can be stuck beautifully in a cylindrical or fan form. Moreover, after sticking, it is possible to exhibit excellent waterproof properties and airtightness over a long period of time.

In this way, since the waterproof and airtight pressure-sensitive adhesive tape of the invention can be stuck in a state having excellent waterproof properties and airtightness, it can be suitably used as a pressure-sensitive adhesive tape having waterproof properties and/or airtightness in response to the utility. In particular, the waterproof and airtight pressure-sensitive adhesive tape of the invention can be stuck in a state having excellent waterproof properties and airtightness; and a sticking application work of the pressure-sensitive adhesive tape is easy. Accordingly, the waterproof and airtight pressure-sensitive adhesive tape of the invention can be utilized as a waterproof and airtight pressure-sensitive adhesive tape which is used for fixing a structure of dwelling house to a member or fixing members to each other. For example, it is useful as a waterproof and airtight pressure-sensitive adhesive tape to be used in fixing of openings such as ventilating openings of external wall penetration portions of exterior backings, surroundings of conduits, penetration portions of water feed/discharge pipes, ventilation fans, and surroundings of sash openings (for example, surroundings of arch type or cylindrical sash openings); shaped portions such as external angles, internal angles, and convexes (in particular, not only a site in which the sticking portion is planar but also a site in which the sticking portion has a curved surface shape or a three-dimensional shape), and so on. Accordingly, by using the waterproof and airtight pressure-sensitive adhesive tape of the invention, it is possible to enhance waterproof properties and airtightness of dwelling houses. Also, it is possible to prevent penetration of storm sewage into the inside of a dwelling house and to prevent dew condensation and corrosion in the inside of a dwelling house.

Incidentally, for example, in the sticking application of a pressure-sensitive adhesive tape in water feed/discharge pipes, there is a sticking application method of a waterproof and airtight pressure-sensitive adhesive tape in a portion where a body and a feed/discharge pipe intersect at right angles each other. In this case, there is usually employed an application method in which the pressure-sensitive adhesive tape is folded in a state that it comes into contact with the back surface in a 1/2 width (by this folding, the back surfaces come into contact with each other); the pressure-sensitive adhesive tape is wound up around the surrounding (circumference) of the feed/discharge pipe; and thereafter, the remaining 1/2-width part is stuck to the body. At this time, a rubber-made sheet made of a general unvulcanized rubber involved a problem that in folding in a 1/2 width, the back surfaces of the rubber-made sheet are liable to adhere to each other due to tackiness (pressure-sensitive adhesive feeling) of the surface of the rubber-made sheet. On the other hand, for the sake of suppressing or preventing adhesion of the back surfaces of a rubber-made sheet to each other, if a silicone-based releasing agent was coated, there was encountered a problem that in sticking, in the case where the pressure-sensitive adhesive tape was superimposed and stuck on the back surfaces (own back surfaces) of the rubber-made sheet, adhesive properties are lost so that airtightness cannot be ensured in that portion. However, when the waterproof and airtight pressure-sensitive adhesive tape of the invention is used, by providing an elongating film-like material on the rear surface (back surface) of a rubber-made sheet, it is possible to design to cope with both prevention of adhesion of the back surfaces to each other and revealment of adhesive properties of a pressure-sensitive adhesive layer.

According to the waterproof and airtight pressure-sensitive adhesive tape of the invention, even when applied in a place required to have elongation properties in a pressure-sensitive adhesive tape, it prevents self adhesion between the back surfaces from occurring, is good in handling properties at the time of application, prevents the generation of wrinkle, cutting or peeling from occurring and is able to exhibit excellent waterproof properties and airtightness over a long period of time. Also, even when a site to which a pressure-sensitive adhesive tape is stuck is a site having a curved surface shape or a three-dimensional shape, the waterproof and airtight pressure-sensitive adhesive tape of the invention is easy with respect to sticking application works of the pressure-sensitive adhesive tape, is good in adhesive properties in an overlap of the pressure-sensitive adhesive tapes after the application and is able to keep to ensure waterproof properties and airtightness over a long period of time. For that reason, the waterproof and airtight pressure-sensitive adhesive tape of the invention is useful as a pressure-sensitive adhesive tape which is used for fixing a structure of dwelling house to a member or fixing members to each other and is able to prevent penetration of storm sewage into the inside of a dwelling house and to prevent dew condensation or corrosion in the inside of dwelling house over a long period of time.

The invention will be described below in more detail with reference to the following Examples, but it should not be construed that the invention is limited thereto.

### PREPARATION EXAMPLE 1 OF SUBSTRATE

50 parts by weight of a butyl rubber, 50 parts by weight of an ethylene-propylene-diene rubber (EPDM), 120 parts by weight of calcium carbonate heavy, 15 parts by weight of a process oil, and 10 parts by weight of carbon black were thrown into a mixer (Banbury mixer) and kneaded for 8 minutes. The kneaded mixture was then molded into a sheet-like form using a calender roll under a condition at a roll temperature of 110°C. There was thus prepared a rubber-made sheet having a thickness of 0.45 mm.

### PREPARATION EXAMPLE 1 OF COATING FILM-FORMING COMPOSITION

Acrylonitrile and octadecyl methacrylate were polymerized in a toluene solution to obtain a copolymer [acrylonitrile/octadecyl methacrylate (weight molar ratio) = 30/70, weight average molecular weight: 40,000]. This copolymer was subjected to concentration adjustment with toluene to prepare a solution having a solids content of 1 % by weight. This solution was designated as a film-forming composition.

### PREPARATION EXAMPLE 1 OF PRESSURE-SENSITIVE ADHESIVE LAYER

A mixture of 100 parts by weight of a butyl rubber, 50 parts by weight of a tackifier, 100 parts by weight of calcium carbonate heavy, 30 parts by weight of carbon black, and 100 parts by weight of a softener was introduced into an extruder and extrusion molded to prepare a sheet-like pressure-sensitive adhesive layer having a thickness of 0.8 mm.

### EXAMPLE 1

The sheet-like pressure-sensitive adhesive layer (thickness: 0.8 mm) as obtained in Preparation Example 1 of Pressure-Sensitive Adhesive Layer was stuck onto one surface of the rubber-made sheet having a thickness of 0.45 mm as obtained in Preparation Example 1 of Substrate, and a release liner one surface of which had been subjected to a silicone mold releasing treatment was further stuck onto the pressure-sensitive layer. Thereafter, a polyethylene film having a thickness of 0.03 mm was laminated on the other surface of the rubber-made sheet (surface in the opposite side to the pressure-sensitive adhesive layer) upon contact adhering by rubber-made pressure rolls, thereby obtaining a pressure-sensitive adhesive tape.

Incidentally, this foregoing polyethylene film has such characteristics that its elongation at break (elongation at the time of breakage) is 670 % in the longitudinal direction and 770 % in the cross direction, respectively.

### EXAMPLE 2

A pressure-sensitive adhesive tape was obtained in the same manner as in Example 1, except that a polyethylene film having a thickness of 0.06 mm and having such characteristics that its elongation at break is 330 % in the longitudinal direction and 600 % in the cross direction, respectively was used in place of the polyethylene film having a thickness of 0.03 mm and having the foregoing characteristics.

### EXAMPLE 3

A pressure-sensitive adhesive tape was obtained in the same manner as in Example 1, except that a molded sheet (polyethylene/polypropylene blend film) formed of a mixed resin resulting from mixing polyethylene and polypropylene in a proportion of polyethylene to polypropylene of 7/3 in terms of a weight ratio and having a thickness of 0.035 mm and having such characteristics that its elongation at break is 540 % in the longitudinal direction and 650 % in the cross direction, respectively was used in place of the polyethylene film having a thickness of 0.03 mm and having the foregoing characteristics.

### EXAMPLE 4

A prescribed amount of the coating film-forming composition as obtained in Preparation Example 1 of Coating Film-Forming Composition was coated on one surface of a polyethylene film having a thickness of 0.025 mm (having such characteristics that its elongation at break is 400 % in the longitudinal direction and 750 % in the cross direction, respectively) and dried at 100°C for 0.5 minutes to form a coating film layer having a thickness of about 3 µm.

A pressure-sensitive adhesive tape was obtained in the same manner as in Example 1, except that the foregoing polyethylene film having a coating film layer was used in place of the polyethylene film having a thickness of 0.03 mm and having the foregoing characteristics.

### COMPARATIVE EXAMPLE 1

The sheet-like pressure-sensitive adhesive layer (thickness: 0.8 mm) as obtained in Preparation Example 1 of Pressure-Sensitive Adhesive Layer was stuck onto one surface of the rubber-made sheet having a thickness of 0.45 mm as obtained in Preparation Example 1 of Substrate, and a release liner one surface of which had been subjected to a silicone mold releasing treatment was further stuck onto the pressure-sensitive layer, thereby obtaining a pressure-sensitive adhesive tape. That is, in the pressure-sensitive adhesive tape according to this Comparative Example 1, a sheet-like material such as a polyethylene film is not laminated on a surface (back surface) in the opposite side to the pressure-sensitive adhesive layer in the rubber-made sheet, and neither treatment nor processing is applied. Accordingly, in the pressure-sensitive adhesive tape according to Comparative Example 1, the back surface of the rubber-made sheet is a surface on which the rubber-made sheet is exposed.

Incidentally, in Examples 1 to 4, with respect to the film-like materials such as the polyethylene film and the polyethylene/polypropylene blend film, the elongation at break was measured by the following measurement method.

### (Measurement method of elongation at break)

A film-like material is punched into a specimen of a dumbbell shape No. 1 as defined in JIS K6251 (test width: 10 mm, distance between two gage marks: 40 mm) in each of the longitudinal direction (MD direction) and the cross direction (TD direction) of the specimen; and by using a tensile tester, the crosshead side of the specimen is drawn at a rate of 300 mm/min under conditions of a distance between two gage marks of the specimen of 40 mm and a width of the specimen of 10 mm, thereby measuring an elongation (%) at the time when the specimen is broken. This measured value is defined as an elongation at break.

### (Evaluation)

With respect to the respective pressure-sensitive adhesive tapes as obtained in Examples 1 to 4 and Comparative Example 1, the sticking application properties were evaluated by the following evaluation method of sticking application properties.

### (Evaluation method of sticking application properties)

Each of the pressure-sensitive adhesive tapes was cut into a width of 50 mm and a length of 250 mm to prepare a pressure-sensitive adhesive tape-stuck specimen. As illustrated in Fig. 2, the foregoing pressure-sensitive adhesive tape-stuck specimen was evaluated with respect to the sticking application properties according to the following evaluation criteria by applying the circumference of a shaped portion of a water feed/discharge pipe (a cylindrical water feed/discharge pipe having an external diameter of 60 mmφ) adhered onto the surface of a body made of a plywood board in the vertically standing state against the surface of the foregoing plywood board (i.e., a joint part between the body and the water feed/discharge pipe and its circumference) in the following application method under a condition at a temperature of 23 ± 2°C and at a humidity of 50 ± 5 % RH. The evaluation results are shown in Table 1.

### (Application method)

First of all, the pressure-sensitive adhesive tape-stuck specimen is folded in half in a state that the back surfaces of the rubber-made sheets as the substrate (namely, the surfaces in the opposite side to the pressure-sensitive adhesive layer) are positioned inward while being faced at each other and that the surface of the pressure-sensitive adhesive layer (surface of the pressure-sensitive adhesive layer) is positioned outward; and the release liner which protects the pressure-sensitive adhesive surface in one of the pressure-sensitive adhesive surfaces which are positioned on the both outer sides is peeled away, thereby exposing the pressure-sensitive adhesive surface. Then, the pressure-sensitive adhesive tape-stuck specimen is stuck onto the outer circumference of a feed/discharge pipe in a state that the exposed pressure-sensitive adhesive surface comes into contact with the outer circumference of the feed/discharge pipe. Thereafter, the remaining release liner is peeled away to expose the remaining pressure-sensitive adhesive surface, and the pressure-sensitive adhesive tape-stuck specimen in the portion of this exposed pressure-sensitive adhesive surface is stuck onto the body while being elongated as illustrated in Fig. 2.

### (Evaluation criteria of sticking application properties)

○: The application works can be easily carried out.
×: In folding in half in a state that the back surfaces of the substrates are faced at each other, the back surfaces of the substrates cause self adhesion so that the application works can be no longer continued.

Fig. 2 is a schematic view to show a method of subjecting a pressure-sensitive adhesive tape to sticking to a circumference of a shaped portion by a method of evaluating sticking application properties in the Examples. In Fig. 2, 6 denotes a body (plywood board); 7 denotes a water feed/discharge pipe; and 8 denotes a pressure-sensitive adhesive tape. In Fig. 2, the water feed/discharge pipe 7 is adhered onto the surface of the body 6 made of a plywood board in the vertically standing state against the surface of the foregoing body (plywood board) 6. The foregoing water feed/discharge pipe 7 has a cylindrical shape having an external diameter of 60 mmφ. The pressure-sensitive adhesive tape 8 is applied in such a shape portion and its circumference (a joint part between the body 6 and the water feed/discharge pipe 7 and its circumference).

**Table 1**

| | Example | | | | Comparative Example |
|---|---|---|---|---|---|
| | 1 | 2 | 3 | 4 | 1 |
| Sticking application properties | ○ | ○ | ○ | ○ | × |

As is clear from the results of the respective evaluations of Table 1 and so on, it was confirmed that the pressure-sensitive adhesive tapes according to Examples 1 to 4 are easy and good in sticking application workability in sites, which are required to have elongation properties of pressure-sensitive adhesive tape at the time of sticking, such as shaped portions and openings.

On the other hand, in the pressure-sensitive adhesive tape according to Comparative Example 1, since the back surface of the substrate is a surface of the rubber-made sheet, in folding in half in a state that the back surfaces of the rubber-made sheet as the substrate (namely, the surfaces in the opposite side to the pressure-sensitive adhesive layer) are positioned inward while being faced at each other and that the surface of the pressure-sensitive adhesive layer (surface of the pressure-sensitive adhesive layer) is positioned outward, the substrates cause self adhesion (blocking) each other, and the application works cannot be easily carried out. Thus, it is apparent that the sticking application workability in shaped portions, openings and so on are poor.

While the invention has been described in detail and with reference to specific embodiments thereof, it will be apparent to one skilled in the art that various changes and modifications can be made therein without departing from the spirit and scope thereof.

## Claims

1. A waterproof and airtight pressure-sensitive adhesive tape comprising a substrate and a pressure-sensitive adhesive layer on one surface thereof, wherein the substrate is a rubber-made sheet; and a film-like material having elongation properties is laminated on a surface in the opposite side to the pressure-sensitive adhesive layer of the substrate.

2. The waterproof and airtight pressure-sensitive adhesive tape according to claim 1, wherein the rubber-made sheet as the substrate has an elongation at the time of breakage (distance between two gage marks: 40 mm, drawing rate: 300 mm/min) of from 200 to 1,200 % in both the longitudinal direction and the cross direction and a stress under 100 % elongation (distance between two gage marks: 40 mm, drawing rate: 50 mm/min) of from 10 to 100 N/cm² in both the longitudinal direction and the cross direction.

3. The waterproof and airtight pressure-sensitive adhesive tape according to claim 1, wherein the film-like material having elongation properties has an elongation at the time of breakage (distance between two gage marks: 40 mm, drawing rate: 300 mm/min) of from 200 to 1,200 % in both the longitudinal direction and the cross direction.

4. The waterproof and airtight pressure-sensitive adhesive tape according to claim 1, wherein the surface of the film-like material having elongation properties in the side coming into contact with the substrate is a surface capable of exhibiting a release function.

5. The waterproof and airtight pressure-sensitive adhesive tape according to claim 4, wherein the surface of the film-like material having elongation properties which surface is able to exhibit a release function is a surface of a release treatment coating film layer or a coating film layer having non-adhesive properties.

6. The waterproof and airtight pressure-sensitive adhesive tape according to claim 5, wherein the release treatment coating film layer is formed of a silicone-based release treating agent.

7. The waterproof and airtight pressure-sensitive adhesive tape according to claim 5, wherein the coating film layer having non-self adhesive properties is formed of a coating film-forming composition containing an acrylic polymer or a long chain alkyl-based compound.

8. The waterproof and airtight pressure-sensitive adhesive tape according to claim 1, wherein the rubber-made sheet is constructed of a rubber composition containing a synthetic rubber as the major component.

9. The waterproof and airtight pressure-sensitive adhesive tape according to claim 8, wherein the synthetic rubber of the rubber-made sheet is at least one synthetic rubber selected from a butyl rubber, an ethylene-propylene rubber and an ethylene-propylene-diene rubber.
